# EUROPÄISCHE PATENTANMELDUNG

(11) **EP 1 344 560 A2**
(43) Veröffentlichungstag der Anmeldung: **17.09.2003**
(21) Anmeldenummer: 03005581.8
(22) Anmeldetag: 12.03.2003
(51) Int. Cl.: B01D 47/14, A01K 1/00, F24F 3/16

(54) **Vorrichtung zum Behandeln wenigstens eines gasförmigen Mediums, insbesondere zum Reinigen von aus Gebäuden abgeführter Luft bzw. von in Gebäude zugeführter Luft**

(30) Priorität: 16.03.2002 DE 10211828
(71) Anmelder: Big Dutchman International GmbH, 49377 Vechta (DE)
(72) Erfinder: Kerssens, Andreas, 49685 Halen (DE); Schwarz, Armin, 49377 Vechta (DE)
(74) Vertreter: Jabbusch, Matthias, Dipl.-Ing.

(57) **Zusammenfassung**

Bei einer Vorrichtung zum Behandeln wenigstens eines gasförmigen Mediums, insbesondere zum Reinigen von aus Gebäuden abgeführter Luft bzw. von in Gebäude zugeführter Luft, umfassend zumindestens einen Strömungskanal (1) für das gasförmige Medium und umfassend wenigstens ein im Strömungskanal angeordnetes Umströmungselement, dessen Oberfläche befeuchtet ist, ist vorgesehen, daß das Umströmungselement wenigstens eine schraubgewendelte Wandung (4) aufweist, welche etwa den gesamten Innenquerschnitt des Strömungskanals (1) überdeckt.

Diese Vorrichtung gewährleistet eine effektive Behandlung, insbesondere Reinigung, des gasförmigen Mediums.

## Beschreibung

Die Erfindung betrifft eine Vorrichtung zum Behandeln wenigstens eines gasförmigen Mediums, insbesondere zum Reinigen von aus Gebäuden abgeführter Luft bzw. von in Gebäude zugeführter Luft, umfassend zumindestens einen Strömungskanal für das gasförmige Medium und umfassend wenigstens ein im Strömungskanal angeordnetes Umströmungselement, dessen Oberfläche befeuchtet ist.

Gasförmige Medien, die insbesondere in Gebäude einzuführen sind bzw. aus Gebäuden abzuführen sind, sind häufig zu behandeln. So ist das gasförmige Medium Luft vor dem Einführen in ein Gebäude gegebenenfalls zu erwärmen, zu reinigen oder zu befeuchten. Auch aus Gebäuden abzuführende gasförmige Medien, wie Rauchabgase, Küchenabgase oder Luft, sind vor dem Entlassen in die Atmosphäre beispielsweise abzukühlen oder zu reinigen.

Insbesondere bei Tierställen ist aus dem Inneren der Tierställe abzuführende Luft zu reinigen. Diese Luft ist mit Partikeln aus dem Stallinneren, wie Staub, belastet, zudem enthält sie gasförmige Belastungen beispielsweise in Form von Ammoniak. Damit diese belastete Luft in die Umgebung eines Tierstalles geführt werden kann, in dessen Nähe gegebenenfalls Anwohner leben, besteht die Anforderung, diese Luft von staubförmigen Partikeln, gasförmigen Partikeln und Geruchspartikeln zu reinigen.

Im Stand der Technik sind für das Reinigen von aus Tierställen abgeführter Luft bzw. zugeführter Luft bereits Vorrichtungen vorgeschlagen worden. Diese Vorrichtungen weisen jeweils wenigstens ein Umströmungselement auf, dessen Oberfläche befeuchtet ist. Das zu behandelnde Gas wird an diesem Umströmungselement vorbei geführt, so daß das Gas mit der befeuchteten Oberfläche des Umströmungselementes in Kontakt gerät. Dabei werden z. B. Partikel aus dem Gas herausgelöst und das Gas somit gereinigt.

Der Erfindung liegt die Aufgabe zugrunde, eine Vorrichtung der eingangs genannten Gattung aufzuzeigen, die eine effektive Behandlung, insbesondere Reinigung, des gasförmigen Mediums gewährleistet.

Diese Aufgabe ist erfindungsgemäß dadurch gelöst, daß das Umströmungselement wenigstens eine schraubgewendelte Wandung aufweist, welche etwa den gesamten Innenquerschnitt des Strömungskanals überdeckt.

Das zu behandelnde Gas wird entsprechend den Vorrichtungen nach dem Stand der Technik bei der erfindungsgemäßen Vorrichtung durch den Strömungskanal geführt. Im Strömungskanal wird das Gas mit dem wenigstens einen in diesem angeordneten Umströmungselement in Kontakt gebracht. Bei der erfindungsgemäßen Vorrichtung weist das Umströmungselement eine besondere konstruktive Ausbildung aus, es ist nämlich als schraubenartige Wendel ausgebildet. Das Gas, das gegen dieses Umströmungselement geführt wird, wird entlang der schraubgewendelten Form auf einer Wendelbewegung entlang einer Schraube durch den Strömungskanal geführt. Dabei wird das Gas beschleunigt und es wirken Fliehkräfte auf im Gas enthaltene Partikel ein. Diese Partikel treten mit dem befeuchteten Umströmungselement in Kontakt, wobei sie beispielsweise aus dem Gas herausgelöst werden, um das Gas zu reinigen.

Durch die besondere Ausgestaltung des Umströmungselementes wird eine verbesserte Behandlung des Gases erreicht. Beispielsweise ist die Reinigungsleistung für aus einem Tierstall abgeführte Luft erhöht. Dadurch ist vorteilhaft ermöglicht, mit einer insgesamt kompakt ausgebildeten Vorrichtung ein gutes Reinigungsergebnis zu erzielen, so daß die Kosten für die Ausbildung der Vorrichtung reduziert sind. Mit der erfindungsgemäßen Vorrichtung gereinigte Stalluft kann in den Stall zurückgeführt werden, so daß die Ausbildung eines kreislaufartigen Reinigungssystems für Stalluft möglich ist.

Nach einer ersten Weiterbildung der Erfindung ist vorgesehen, daß das Umströmungselement eine Säule umfaßt, welche etwa in der Längsmittelachse des Strömungskanals verlaufend angeordnet ist und daß die wenigstens eine Wandung die Säule umlaufend an der Säule angesetzt ist. Mit Hilfe der Säule wird die wenigstens eine Wandung im Inneren des Strömungskanals angeordnet. Die Säule verläuft dabei vorzugsweise über die gesamte Länge des Strömungskanals, so daß sie über die gesamte Länge des Strömungskanals eine Ansetzmöglichkeit für die wenigstens eine Wandung ausbildet. Dabei können zum Beispiel vier die Säule jeweils in Schraubwendelform umlaufende Wandungen vorgesehen sein, wobei der Ansatz jeder dieser Wandungen an der Säule an voneinander verschiedenen Abschnitten entlang ihrer Längserstreckung erfolgt. Die vier Wandungen werden dann ineinander verdreht, wobei zwei einander benachbarte Wandungen jeweils einen Gasströmungsweg ausbilden, durch den das zu behandelnde Gas auf einer Schraubwendelform durch den Strömungskanal geführt wird.

Nach einer nächsten Weiterbildung der Erfindung ist vorgesehen, daß die Säule als Flüssigkeitszuleitung ausgebildet ist und daß im Ansetzbereich einer Wandung an die Säule zumindestens ein Durchbruch in der Säule angeordnet ist. Die Säule wird bei der erfindungsgemäßen Vorrichtung somit als Flüssigkeitszuführung zu den Wandungen eingesetzt. Dabei wird die zentrale Anordnung der Säule und das Anbringen der Wandungen an der Säule ausgenutzt. In der Säule kann zum Beispiel eine Flüssigkeitssäule stehen, wobei durch in der Oberfläche der Säule angeordnete Durchbrüche ein Flüssigkeitsaustritt ermöglicht ist. Die Durchbrüche sind jeweils auf Höhe einer Wandung bzw. eines Wandungsabschnittes angeordnet, so daß durch einen Durchbruch hindurch tretende Flüssigkeit den Wandungen zugeführt wird.

Jede Wandung ist bevorzugt aus einem porösen Material gefertigt. Das poröse Material ist dazu geeignet, aus der Säule austretende Flüssigkeit aufzunehmen und gleichmäßig über die Oberfläche der Wandung zu verteilen. Der zu behandelnden Luft wird dadurch vorteilhaft eine große angefeuchtete Fläche für den Kontakt bereit gestellt.

Nach einer nächsten Weiterbildung der Erfindung ist vorgesehen, daß jede Wandung aus eng nebeneinander stehenden Stabelementen ausgebildet ist. Eine Wandung kann einteilig als Formprofil ausgebildet sein. Bevorzugt ist aber vorgesehen, die Wandung aus einzelnen Stabelementen auszubilden, die nebeneinander fortlaufend eine Schraubwendelform ausbildend an der Säule angeordnet sind. Durch die Ausbildung einzelner Stabelemente ist die Oberfläche der Wandung noch vergrößerbar. Zudem kann erreicht werden, daß jedes einzelne Stabelement von dem zu behandelnden Gas umströmt wird, so daß ein besseres Inkontakttreten zwischen Gas und Wandung erreicht ist.

Die im Anströmungsbereich des Gases angeordnete Seite jedes Stabelementes kann dabei eine Kreisquerschnittsform aufweisen, während die im Abströmungsbereich angeordnete Seite jedes Stabelementes zwei spitzwinklig in einem Punkt zusammenlaufende Seitenflächen hat. Diese Querschnittsform ist strömungsgünstig. Sie ist etwa nach Art einer Flugzeugtragfläche ausgebildet und kann von der zu behandelnden Luft ganz gleichmäßig ohne Verursachen von Turbulenzen umströmt werden. Vorteilhaft ist dadurch ein besserer Kontakt zwischen der Oberfläche des Stabelementes und dem zu behandelnden Gas erreicht.

Nach einer nächsten Weiterbildung der Erfindung ist vorgesehen, daß die erfindungsgemäße Vorrichtung in einen Flüssigkeitskreislauf integriert ist, wobei bei etwa vertikaler Ausrichtung des Strömungskanals in einem Bereich unterhalb der Säule eine Flüssigkeitsauffangeinrichtung angeordnet ist. Bei einer etwa vertikalen Ausrichtung des Strömungskanals ist auch die im Strömungskanal angeordnete Säule vertikal ausgerichtet. Durch die Säule und die Wandungen zugeführte Flüssigkeit kann dadurch an der Außenseite der Säule herablaufen. In dem räumlichen Bereich unterhalb der Säule wird die Flüssigkeit aufgefangen, weshalb in diesem Bereich die Flüssigkeitsauffangeinrichtung, umfassend beispielsweise ein Trichterelement, angeordnet ist. Die aufgefangene Flüssigkeit kann gegebenenfalls nach einer Behandlung, insbesondere Reinigung, wieder der erfindungsgemäßen Vorrichtung zugeführt werden. In diesem Kreislauf kann der Flüssigkeit zudem wenigstens ein Zusatz, z. B. ein Reinigungsmittel, zugefügt werden.

Damit aus den Wandungen austretende Flüssigkeit zur Säule zurück geführt wird, ist nach einer Weiterbildung der Erfindung vorgesehen, daß jede Wandung in jedem Abschnitt ihrer Erstreckung in schräger Anstellung an die Säule angesetzt ist, wobei das freie Ende der Wandung in einer höheren Ebene angeordnet ist als der Ansetzbereich. Jede Wandung ist somit in einer schrägen Anordnung zur Oberfläche an der Säule angesetzt, so daß aus der Wandung austretende Flüssigkeit auf ihrer Oberfläche zur Säule zurückfließt und anschließend auf der Säule abfließt.

Die erfindungsgemäße Vorrichtung kann dabei auch mit dem Flüssigkeitskreislauf auf einem mobilen Tragelement angeordnet sein. Die Bauteile der erfindungsgemäßen Vorrichtung sind kompakt ausbildbar, so daß sie zum Beispiel auf einem Palettenträger angeordnet sind und auf diesem zu voneinander verschiedenen Einsatzorten transportiert werden können. Bei Einsatz der erfindungsgemäßen Vorrichtung zur Reinigung von Stalluft ist ein dezentraler Einsatz mehrerer erfindungsgemäßer Vorrichtungen möglich, wobei vorzugsweise jeweils eine Vorrichtung einem Stalluftauslaß zugeordnet ist.

Für die Fertigung der erfindungsgemäßen Vorrichtung ist nach einer Weiterbildung der Erfindung vorgesehen, daß die Wandung aus einem Kunststoff gefertigt ist. Als Kunststoff kann dabei ein poröses Polyethylen eingesetzt werden.

Schließlich kann im Strömungskanal wenigstens ein Ventilator angeordnet sein, um definierte Strömungsverhältnisse im Strömungskanal herzustellen.

Ein Ausführungsbeispiel der Erfindung, aus dem sich weitere erfinderische Merkmale ergeben, ist in der Zeichnung dargestellt. Es zeigen:
Fig. 1 eine schematische Ansicht einer in einen Flüssigkeitskreislauf eingesetzten Vorrichtung zum Behandeln eines gasförmigen Mediums,
Fig. 2 eine maßstäbliche vergrößerte Schnittansicht der Einzelheit II in Fig. 1,
Fig. 3 eine schematische Ansicht eines Bauteils der erfindungsgemäßen Vorrichtung in Fig. 1 und
Fig. 4 eine Seitenansicht des Bauteils gemäß Fig. 3.

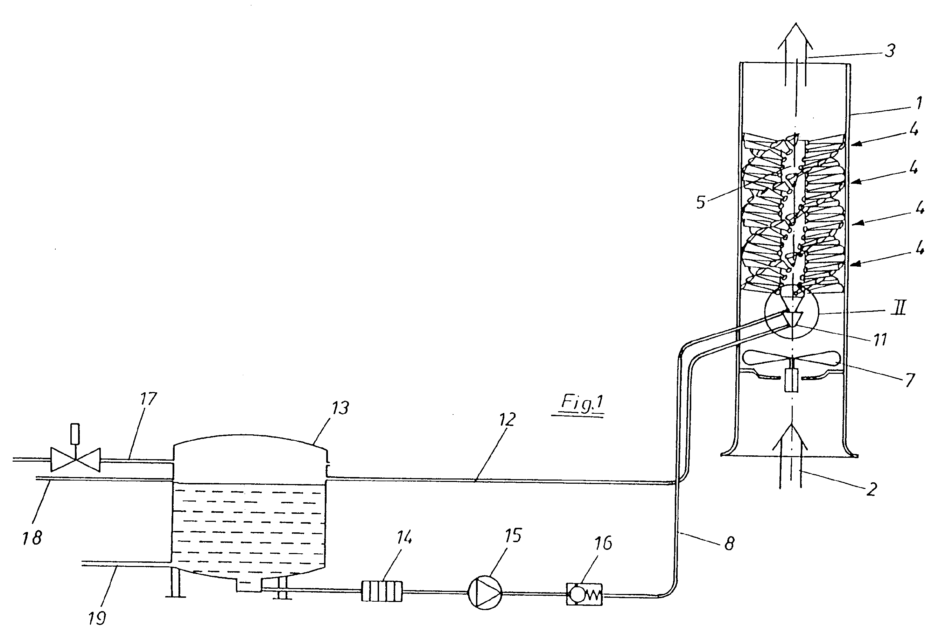

Die Vorrichtung zum Behandeln eines gasförmigen Mediums in Fig. 1 weist einen rohrförmigen Strömungskanal 1 auf. An der in Fig. 1 unteren Seite wird in den Strömungskanal 1 ein gasförmiges Medium eingeführt, wie mit dem Pfeil 2 verdeutlicht ist. Auf der gegenüberliegenden Seite des Strömungskanals 1 tritt das gasförmige Medium wieder aus dem Strömungskanal 1 heraus (Pfeil 3). Der Strömungskanal 1 ist somit als Kaminrohr mit einer Eintrittsöffnung und mit einer Austrittsöffnung ausgebildet.

Im Inneren des Strömungskanals 1 ist ein Umströmungselement angeordnet. Dieses Umströmungselement weist Wandungen 4 auf, die jeweils eine schraubgewendelte Ausbildung haben. Jede Wandung 4 ist dabei schraubgewendelt um eine in der Längsmittelachse des Strömungskanals 1 angeordnete Säule 5 umlaufend angeordnet, wobei die Wandungen 4 an der Säule 5 angesetzt sind. Zwischen den Wandungen 4 und der Innenfläche des Strömungskanals 1 ist ein geringer Abstand ausgebildet.

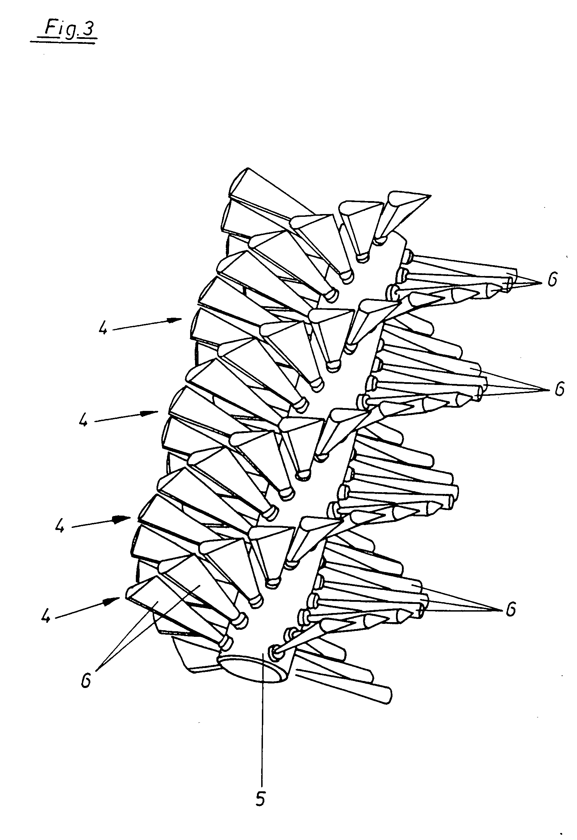

Fig. 1 und Fig. 3 zeigen, daß jede Wandung 4 aus einzelnen Stabelementen 6 ausgebildet ist. Zwei einander benachbarte Stabelemente 6 ein und derselben Wandung 4 sind eng nebeneinander angeordnet, wobei zwischen beiden Stabelementen 6 ein Versatz entlang der Längserstreckung der Säule 5 gegeben ist. Durch dieses fortschreitende Versetzen der nachfolgenden Stabelemente 6 und durch fortsetzende Abweichung der Anordnung der Stabelemente 6 auf dem Umfang der im Schnitt kreisförmigen Säule 5 wird die erfindungsgemäße schraubgewendelte Form der Wandung 4 konstruktiv ausgebildet.

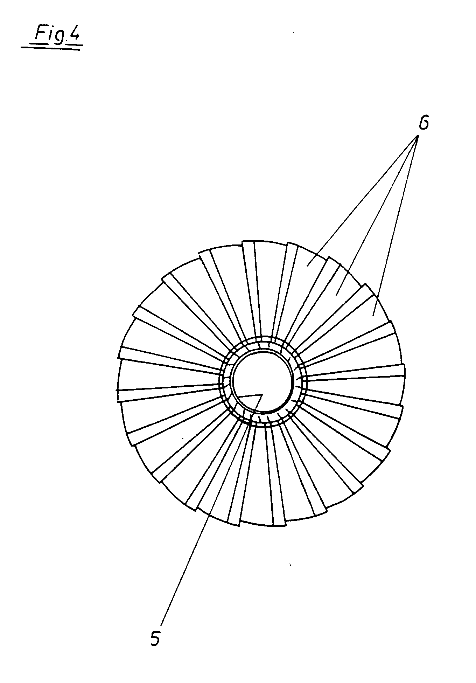

Fig. 4 zeigt dabei, daß durch die Stabelemente 6 insgesamt der gesamte Querschnitt des Inneren des Strömungskanals 1 abgedeckt ist.

Insbesondere aus Fig. 3 ist die Querschnittsform jedes Stabelementes 6 ersichtlich. Diese ist durch einen etwa kreisförmigen Abschnitt gekennzeichnet, wobei ein dem kreisförmigen Abschnitt gegenüberliegender Abschnitt durch zwei sich spitzwinklig zu einem Punkt verengende Seitenflächen ausgebildet ist. Der kreisförmige Abschnitt wird dabei dem anströmenden Gas entgegen gestellt, während die sich einander annähernden Seitenflächen auf der Abströmungsseite angeordnet sind.

Fig. 1 zeigt, daß im Strömungskanal 1 in Gasströmungsrichtung vor dem Umströmungselement ein Ventilator 7 angeordnet ist.

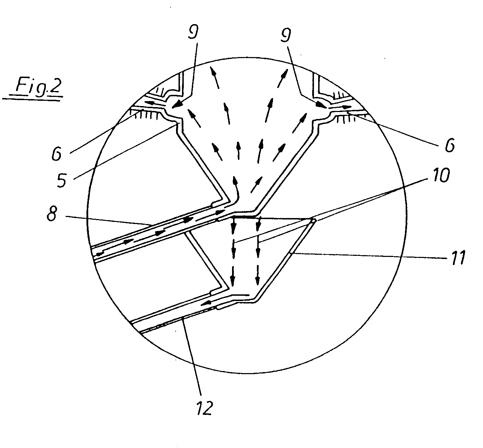

Die erfindungsgemäße Vorrichtung ist in einen Flüssigkeitskreislauf integriert, wobei zu dem Umströmungselement eine Flüssigkeitszuleitung 8 geführt ist. Diese Flüssigkeitszuleitung 8 ist mit dem Inneren der Säule 5 flüssigkeitsleitend verbunden, wie aus Fig. 2 ersichtlich ist. Aus dem Inneren der Säule 5 kann Flüssigkeit in die Stabelemente 6 austreten, da die Säule 5 im Bereich der Wandungen 4 Durchbrüche 9 aufweist. Die Stabelemente 6 der Wandungen 4 sind aus porösem Kunststoff ausgebildet, so daß zugeführte Flüssigkeit durch die Stabelemente 6 hindurch an die Oberfläche der Stabelemente 6 austritt.

Ausgetretene Flüssigkeit läuft anschließend an der Oberfläche der Stabelemente 6 in Richtung der Säule 5 ab und fließt anschließend an der Außenseite der Säule 5 hinab. Mit Pfeilen 10 ist dargestellt, daß hinabfließende Flüssigkeit in einer Flüssigkeitsauffangeinrichtung 11 unterhalb der Säule 5 aufgefangen wird. An die Flüssigkeitsauffangeinrichtung 11 ist eine Flüssigkeitsableitung 12 flüssigkeitsleitend angeschlossen, diese ist zu einem Behälter 13 geführt, an den die Flüssigkeitszuleitung 8 angeschlossen ist. Im Verlauf der Flüssigkeitszuleitung 8 ist ein Filter 14, eine Pumpe 15 sowie ein Rückschlagventil 16 angeordnet.

In den Behälter 13 führen noch ein Zulauf 17 sowie eine Zusatzleitung 18, über welche der Flüssigkeit beispielsweise chemische Zusätze zugefügt werden können. Schließlich weist der Behälter 13 noch einen Auslauf 19 auf.

## Patentansprüche

1. Vorrichtung zum Behandeln wenigstens eines gasförmigen Mediums, insbesondere zum Reinigen von aus Gebäuden abgeführter Luft bzw. von in Gebäude zugeführter Luft, umfassend zumindestens einen Strömungskanal für das gasförmige Medium und umfassend wenigstens ein im Strömungskanal angeordnetes Umströmungselement, dessen Oberfläche befeuchtet ist,
**dadurch gekennzeichnet,**
**daß** das Umströmungselement wenigstens eine schraubgewendelte Wandung (4) aufweist, welche etwa den gesamten Innenquerschnitt des Strömungskanals (1) überdeckt.

2. Vorrichtung nach Anspruch 1, **dadurch gekennzeichnet, daß** das Umströmungselement eine Säule (5) umfaßt, welche etwa in der Längsmittelachse des Strömungskanals (1) verlaufend angeordnet ist, und daß die wenigstens eine Wandung (4) die Säule (5) umlaufend an der Säule (5) angesetzt ist.

3. Vorrichtung nach Anspruch 2, **dadurch gekennzeichnet, daß** vier die Säule (5) umlaufende Wandungen (4) vorgesehen sind.

4. Vorrichtung nach Anspruch 2 oder 3, **dadurch gekennzeichnet, daß** die Säule (5) als Flüssigkeitszuleitung ausgebildet ist und daß im Ansetzbereich einer Wandung (4) an die Säule (5) zumindestens ein Durchbruch (9) in der Säule (5) angeordnet ist.

5. Vorrichtung nach Anspruch 4, **dadurch gekennzeichnet, daß** die Wandung (4) aus einem porösen Material gefertigt ist.

6. Vorrichtung nach einem der vorhergehenden Ansprüche, **dadurch gekennzeichnet, daß** jede Wandung (4) aus eng nebeneinander stehenden Stabelementen (6) ausgebildet ist.

7. Vorrichtung nach Anspruch 6, **dadurch gekennzeichnet, daß** die im Anströmungsbereich angeordnete Seite jedes Stabelementes (6) eine Kreisquerschnittsform hat, während die im Abströmungsbereich angeordnete Seite jedes Stabelementes (6) zwei spitzwinklig in einem Punkt zusammenlaufende Seitenflächen hat.

8. Vorrichtung nach einem der vorhergehenden Ansprüche, **dadurch gekennzeichnet, daß** sie in wenigstens einen Flüssigkeitskreislauf integriert ist, wobei bei etwa vertikaler Ausrichtung des Strömungskanals (1) in einem Bereich unterhalb der Säule (5) eine Flüssigkeitsauffangeinrichtung (11) angeordnet ist.

9. Vorrichtung nach Anspruch 8, **dadurch gekennzeichnet, daß** die Wandung (4) in jedem Abschnitt ihrer Erstreckung in schräger Anstellung an die Säule (5) angesetzt ist, wobei das freie Ende der Wandung (4) in einer höheren Ebene angeordnet ist als der Ansetzbereich.

10. Vorrichtung nach Anspruch 8 oder 9, **dadurch gekennzeichnet, daß** sie auf einem mobilen Tragelement angeordnet ist.

11. Vorrichtung nach einem der Ansprüche 5 bis 10, **dadurch gekennzeichnet, daß** die Wandung (4) aus einem Kunststoff gefertigt ist.

12. Vorrichtung nach Anspruch 11, **dadurch gekennzeichnet, daß** die Wandung (4) aus Polyethylen gefertigt ist.

13. Vorrichtung nach einem der vorhergehenden Ansprüche, **dadurch gekennzeichnet, daß** im Strömungskanal wenigstens ein Ventilator (7) angeordnet ist.
